# EUROPÄISCHE PATENTANMELDUNG

(11) **EP 1 342 545 A1**
(43) Veröffentlichungstag der Anmeldung: **10.09.2003**
(21) Anmeldenummer: 03003099.3
(22) Anmeldetag: 13.02.2003
(51) Int. Cl.: B29C 43/14, B29C 45/56, B29C 45/14, B29C 70/78

(54) **Verfahren und Vorrichtung zum Herstellen von Kunststoffformteilen durch Pressen und Spritzprägen**

(30) Priorität: 20.02.2002 DE 10207080
(71) Anmelder: Krauss-Maffei Kunststofftechnik GmbH, 80997 München (DE)
(72) Erfinder: Bürkle, Erwin, 83671 Benediktbeuern (DE); Spötzl, Markus, 81475 München (DE); Brugman, Cees, 4614 XP Bergen of Zoom (NL); Meeuwsen, Arnold J., 466 LL Haltsteren (NL)
(74) Vertreter: Zollner, Richard

(57) **Zusammenfassung**

Die Erfindung betrifft ein Verfahren und eine Vorrichtung zum Herstellen eines großflächigen Kunststoffformteils mit zumindest einer faserverstärkten Einlage und einer durch eine separate Oberflächenmasse gebildeten Oberflächenschicht in einem zumindest zwei Werkzeughälften aufweisenden Formprägewerkzeug, mit dem zumindest eine Formkavität gebildet werden kann.

Um eine einwandfreie Oberfläche des Kunststoffformteils sicherzustellen, wird ein Verfahren und eine Vorrichtung zur Durchführung des Verfahrens mit folgenden Verfahrensschritten vorgeschlagen:
e) Einbringen der zumindest einen faserverstärkten Einlage in einen Hohlraum des Formprägewerkzeugs,
f) Öffnen oder Schließen des Formprägewerkzeugs derart, dass ein Formhohlraum vordefinierter Größe ausgebildet ist,
g) Kontinuierliches Einbringen der Oberflächenmasse in eine Formkavität, die zumindest teilweise zwischen einer Werkzeughälfte und der faserverstärkten Einlage ausgebildet ist, unter gleichzeitigem oder intermittierendem Schließen der Form und formgebendem Verpressen des Oberflächenmasse und
h) Öffnen des Formprägewerkzeugs nach dem zumindest teilweise Aushärten der Oberflächenmasse.

## Beschreibung

Die Erfindung betrifft ein Verfahren zum Herstellen von Kunststoffformteilen mit zumindest einer faserverstärkten Einlage und einer durch eine separate Oberflächenmasse gebildeten Oberflächenschicht in einem zumindest zwei Werkzeughälften aufweisenden Formprägewerkzeug, mit dem zumindest eine Formkavität gebildet werden kann, sowie einer Vorrichtung zur Durchführung des Verfahrens.

Beim Herstellen großflächiger Kunststoffformteile durch Spritzgießvorgänge sind deren Dimensionen aufgrund der materialbedingten Fließlängen bezogen auf die Materialdicke eingeschränkt.

Auf der anderen Seite sind bei großflächigen Kunststoffformteilen, bei denen einwandfreie Oberflächen verlangt werden, und die mittels Fließpress-Vorgängen oder Formpress-Vorgängen hergestellt werden, aufwendige Oberflächen-Nachbehandlungen durchzuführen. Solche Oberflächen-Nachbehandlungen umfassen das Auftragen von Füller- und Lackschichten, um beispielsweise die im Automobilbau geforderten Oberflächenqualitäten sicherzustellen.

Diese Nachteile treten nicht nur bei der Formverpressung von glasmattenverstärkten Thermoplasten (GMT), sondern auch bei der Verarbeitung von glasfaserverstärkten UP-Harzen (SMC) auf. Um die vorgenannten Nachteile zu vermeiden, wurde bereits vor einiger Zeit das sogenannte IMC-Verfahren (In-Mould-Coating-Verfahren) eingeführt. Hierbei wird aus Kostengründen nur mit dünnen Lackschichten gearbeitet, wodurch die Ausschussquote in Folge von Lunkerstellen unverhältnismäßig groß ist. Dies gilt sowohl für SMC- als auch für GMT-Teile. Überdies ist es nachteilig, dass SMC-Teile (Duroplast-Teile) nur schlecht in einen Recycling-Kreislauf einbezogen werden können.

Verfahren und Vorrichtungen zur Herstellung von Kunststoffformteilen sind in großer Anzahl bekannt. Aus der DE-OS 2753870 ist ein Verfahren zur Formung eines zusammengesetzten polymeren Artikels bekannt. Dabei wird ein zusammengesetzter polymerer Artikel aus einem Substrat und einer darauf aufgebrachten Oberfläche in Form einer Haut mit vorbestimmter Dicke hergestellt. Beim Herstellungsprozess wird zunächst das Substrat in eine geeignete Form verpresst. Sodann wird die Form unter gleichzeitiger Einbringung des Hautmaterials aufgefahren, und zwar derart, dass das Substrat durch das eingebrachte Hautmaterial in Position gehalten wird. Nach dem vollständigen Einbringen der die spätere Haut bildenden Kunststoffmasse wird die Form in einem Pressvorgang zusammengefahren und die Kunststoffmasse verpresst.

In der EP 0 477 967 B1 ist ein Verfahren zum Pressformen von thermoplastischen Harzen beschrieben, bei dem das Formprägewerkzeug zunächst soweit zusammengefahren wird, dass eine Formkavität mit kleinerer Dimension als der schließlich hergestellte Artikel entsteht. Beim nachfolgenden Öffnen des Formprägewerkzeugs wird Kunststoffmaterial in die sich dabei vergrößernde Formkavität eingebracht. Dabei wird das Formprägewerkzeug weiter aufgefahren, als dies durch die Dimension des später hergestellten Produktes definiert ist. Anschließend wird das Formprägewerkzeug für einen Verpressschritt wieder zusammengefahren.

In der EP 0 333 198 A2 ist ein Verfahren zum Herstellen eines mehrlagigen Kunststoffartikels bekannt, bei dem in einem ersten Schritt eine Dekorbahn zwischen zwei Werkzeughälften eines geöffneten Formprägewerkzeugs eingebracht wird. Anschließend wird in die Formkavität zwischen der Dekorbahn und einer Werkzeughälfte eine Kunststoffmasse eingebracht, welche in einem darauffolgenden Prägeschritt zu den o. g. Mehrlageprodukt verpresst wird.

Die DE 195 31 143 C2 beschreibt schließlich ein Verfahren zum Herstellen eines Kunststoffformteils, bei dem das Formprägewerkzeug unter Einbringen einer plastifizierten Kunststoffmasse gleichzeitig geöffnet wird, um so einen fortlaufend vergrößerten Formhohlraum zu gewährleisten. Damit wird zum einen ein zu hoher Einspritzdruck vermieden und zum anderen ein Abgleiten des sogenannten Quellkuchens in einen zu großen Quellspalt. Nach dem Einbringen der plastifizierten Kunststoffmasse wird das Formprägewerkzeug in einem Prägeschritt geschlossen.

Aufgabe der vorliegenden Erfindung ist es, ein Verfahren und eine Vorrichtung zur Durchführung eines solchen Verfahrens anzugeben, mit dem sich einwandfreie Oberflächen bei großflächigen Kunststoffteilen, die faserverstärkte Einlagen aufweisen, erzielen lassen.

Diese Aufgabe wird alternativ durch die Merkmale im Anspruch 1 sowie durch die Merkmale im Anspruch 8 gelöst.

Ein wesentlicher Aspekt sowohl der verfahrens- wie auch der vorrichtungsmäßigen Ansprüche besteht darin, dass die zur Oberflächenschichtbildung verwendete Oberflächenmasse gleichzeitig oder intermittierend mit dem Schließen des Formprägewerkzeugs in die Formkavität eingebracht wird. Damit laufen der Einbringungsvorgang der Oberflächenmasse und die schließ- bzw. formgebende Verpressung der Oberflächenmasse gleichzeitig ab. Aufgrund von Versuchen hat sich herausgestellt, dass mit diesem Verfahren hervorragende Oberflächengüten erreicht werden können. Dies wird insbesondere im Zusammenhang mit der Verwendung von faserverstärkten Einlagematerialien, wie sie beispielsweise für stabile Automobilkarosserieteile verwendet werden, von besonderem Interesse.

Vor dem Aufbringen der die Oberflächenschicht bildenden Oberflächenmasse wird die faserverstärkte Einlage, bei der es sich beispielsweise um einen glasmattenverstärkten Thermoplasten (GMT) oder um glasfaserverstärkte Harze (SMC) handelt, in das Formprägewerkzeug eingebracht. Dies ist in verschiedener Weise zu erreichen. Beispielsweise können entsprechende Matten in die Kavität eines zumindest teilweise geöffneten Formprägewerkzeug eingelegt werden. Diese Matten können dann in einem ersten Vorpositionierungs- oder Pressschritt positioniert bzw. formgepresst werden.

Alternativ kann die als Substrat dienende faserverstärkte Einlage natürlich auch in einem ersten Schritt eingespritzt werden. In hervorragender Weise eignen sich dazu heutzutage sogenannte Compounder-Anlagen, bei denen in einer ersten Extrudereinrichtung die glasfaserverstärkte Grundmasse hergestellt wird. Diese Grundmasse kann dann über eine meist separate Einspritzeinrichtung in eine erste Kavität des Formprägewerkzeugs eingespritzt werden.

Dabei ist es natürlich möglich, ein Formprägewerkzeug zu verwenden, welches wenigstens drei Werkzeughälften aufweist, mit denen - zumindest nacheinander - wenigstens zwei Formkavitäten gebildet werden können. Die als Substrat dienende faserverstärkte Einlage wird dann in einem ersten Einspritzvorgang in die erste Kavität des Formprägewerkzeugs eingespritzt. Nach dem zumindest teilweise Aushärten des Substrats wird sodann die Form geöffnet und mit einer weiteren Werkzeughälfte eine zweite Formkavität gebildet, in die dann die zur Bildung der Oberflächenschicht verwendete Oberflächenmasse in einem weiteren Schritt eingespritzt werden. Bestandteile des Formprägewerkzeugs können dabei sogenannte Wendeplatten sein, die zur Ausbildung verschiedener Formkavitäten an sich bekannt sind. Alternativ ist es auch möglich verschieblich positionierbare Platten oder Tische zu verwenden, mit denen Formkavitäten auf unterschiedliche Weise gebildet werden können.

Als Oberflächenmasse kann ein thermoplastischer Kunststoff verwendet werden. Wird auch für die faserverstärkte Einlage ein thermoplastischer Kunststoff verwendet, so hat dies den Vorteil, dass bei solchen gleichen oder bei ähnlichen Stoffen ein späteres Wiederverarbeiten (Recycling-Kreislauf) leichter möglich ist.

Um die Oberflächenmasse in eine Formkavität einzubringen, kann vorzugsweise in einer Werkzeughälfte ein Heißkanal ausgebildet sein. Diese und ähnliche vorteilhafte Ausführungsformen der Erfindung sind in den beiliegenden Patentansprüchen näher definiert.

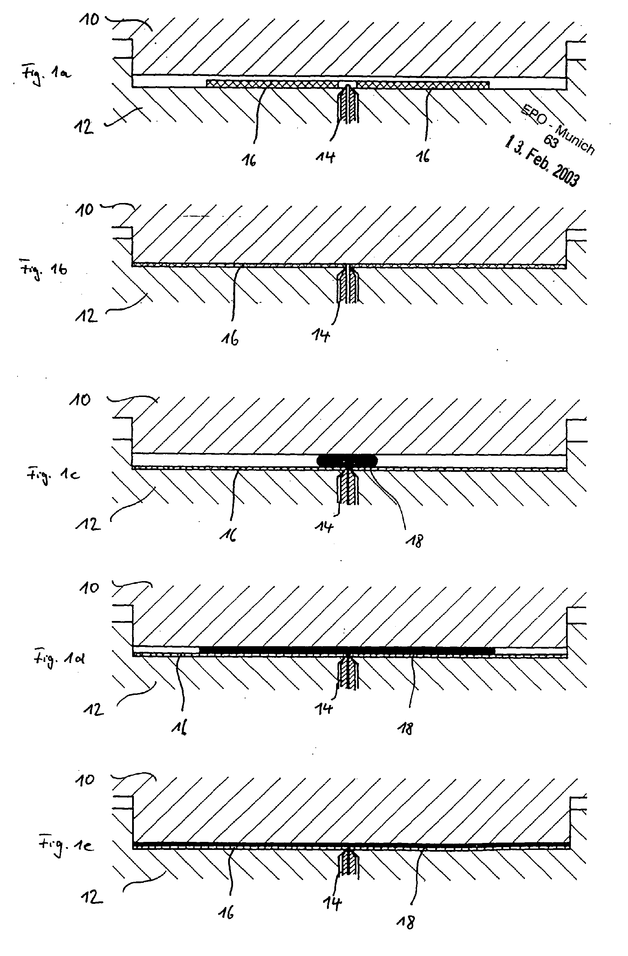

Nachfolgend wird die vorliegende Erfindung anhand eines einfachen Ausführungsbeispiels und mit Bezug auf die beiliegenden Zeichnungen näher erläutert. Die Zeichnungen zeigen in
- Fig. 1a: eine schematische Schnittansicht eines aus zwei Werkzeughälften bestehenden Formprägewerkzeugs, bei dem in einer ersten Formkavität eine glasfaserverstärkte Einlage eingebracht ist,
- Fig. 1b: eine Ansicht wie Fig. 1a, wobei die glasfaserverstärkte Einlage formgepresst ist,
- Fig. 1c: eine wiederum geöffnetes Formprägewerkzeug in einer Ansicht wie in Fig. 1a, bei dem das Einbringen der Oberflächenmasse gestartet ist,
- Fig. 1d: eine Darstellung wie Fig. 1a, bei der die Oberflächenmasse bei gleichzeitigen Einbringen zum Teil verpresst ist und
- Fig. 1e: eine Darstellung wie Fig. 1a, bei der die eingebrachte Oberflächenmasse vollständig verpresst ist.

In den beiliegenden Figuren 1a bis 1e werden die relevanten Verfahrensschritte des erfindungsgemäßen Verfahrens bzw. bei der erfindungsgemäßen Vorrichtung im einzelnen dargestellt. Dabei zeigen die Figuren 1a - 1e jeweils in stark schematischer Weise ein einfaches Formprägewerkzeug mit zwei Werkzeughälften 10 und 12, welche mit Tauchkanten ausgebildet sind und zwischen denen verschieden große Formkavitäten ausbildbar sind. Durch eine nicht weiter dargestellte Einrichtung können die beiden Werkzeughälften relativ zueinander auseinander- oder zusammenbewegt werden.

Beim Verfahrensschritt gemäß Fig. 1a wurde eine glasmattenverstärkte Thermoplast-Matte 16 in die Formkavität zwischen den beiden Werkzeughälften 10 und 12 eingebracht und die beiden Werkzeughälften, bereits etwas relativ zueinander, aufeinander zu bewegt.

Beim Schritt in Fig. 1b wurden die beiden Werkzeughälften 10 und 12 in einem Verpressschritt soweit zusammengefahren, dass die vorher eingelegte glasfaserverstärkte Thermoplast-Matte 16 in vordefinierter Weise formverpresst ist. Dabei bleibt mittig ein Kanal für die Zuführung der die Oberflächenschicht bildenden Oberflächenmasse über einen Heißkanal 14 frei.

Im Schritt gemäß Fig. 1c wurden die beiden Werkzeughälften 10 und 12 nach den ersten Verpressschritt gemäß Fig. 1 b wieder auseinander gefahren und bilden nun eine weitere Kavität, in die über den Heißkanal 14 die die spätere Oberflächenschicht bildende Oberflächenmasse 18 eingespritzt wird. Gleichzeitig oder alternativ intermittierend mit dem Einspritzvorgang der Oberflächenmasse werden die beiden Werkzeughälften 10 und 12 aufeinander zu bewegt, wodurch der thermoplastische Kunststoff verpresst wird.

In der Fig. 1d ist ein Verfahrenszustand dargestellt, bei dem bereits eine signifikante Menge an Oberflächenmasse 18 in die sich fortlaufend verkleinernde Kavität eingebracht ist, wobei die eingebrachte Oberflächenmasse auch durch das Zusammenfahren der beiden Werkzeughälften bereits recht gut verteilt ist.

In Fig. 1e schließlich ist das Ende sowohl der Einspritzung als auch der Verpressung der Oberflächenmasse erreicht. Es wird über eine bestimmte Zeit noch ein Nachdruck **über die beiden Werkzeughälften 10 und 12 Werkzeugbewegung** aufrechterhalten, um die plastifiziert eingebrachte Kunststoffmasse aushärten zu lassen. Nach dem zumindest teilweisen Aushärten werden die beiden Werkzeughälften 10 und 12 auseinandergefahren und das fertiggestellte Werkstück entnommen.

In den Figuren 1a bis 1e nicht dargestellt sind die übrigen Elemente einer entsprechenden Spritzgießmaschine mit den kompletten Schließ- und Plastifiziereinheiten. Doch können hierfür handelsübliche und an sich bekannte Einheiten verwendet werden, so dass vorliegend auf eine genauere Darstellung verzichtet wird.

Ebenso wird auf eine Darstellung von Formprägewerkzeugen verzichtet, die eine sogenannten Wendeplatte oder verschieblich angeordnete Teile von Formprägewerkzeugen aufweisen. Entscheidend ist hierbei lediglich dass ein Formprägewerkzeug mit einer jeweils veränderlich ausgestaltbaren Formkavität oder ein Formprägewerkzeug mit mehreren Kavitäten verwendet werden kann, wobei die faserverstärkte Einlage in eine erste Kavität einzubringen ist und die die Beschichtung der Einlage mit der gewünschten Oberfläche in einer vergrößerten oder anderen Kavität erfolgt. Wie die Kavitäten bereitgestellt werden ist vorliegend nicht erfindungswesentlich.

Insgesamt ist es mit dem vorliegenden Verfahren und mit einer entsprechenden Vorrichtung zur Durchführung eines solchen Verfahrens möglich, großflächige stabile Kunststoffteile mit einer einwandfreien Oberfläche auf einfache und kostengünstige Weise herstellen zu können.

## Patentansprüche

1. Verfahren zum Herstellen eines Kunststoffformteils mit zumindest einer faserverstärkten Einlage und einer durch eine separate Oberflächenmasse gebildeten Oberflächenschicht in einem zumindest zwei Werkzeughälften aufweisenden Formprägewerkzeug, mit dem zumindest eine Formkavität gebildet werden kann, mit den Verfahrensschritten:
a) Einbringen der zumindest einen faserverstärkten Einlage in einen Hohlraum des Formprägewerkzeugs,
b) Öffnen oder Schließen des Formprägewerkzeugs derart, dass ein Formhohlraum vordefinierter Größe ausgebildet ist,
c) Kontinuierliches Einbringen der Oberflächenmasse in eine Formkavität, die zumindest teilweise zwischen einer Werkzeughälfte (10) und der faserverstärkten Einlage ausgebildet ist, unter gleichzeitigem oder intermittierendem Schließen der Form und formgebendem Verpressen des Oberflächenmasse und
d) Öffnen des Formprägewerkzeugs nach dem zumindest teilweise Aushärten der Oberflächenmasse.

2. Verfahren nach Anspruch 1, **dadurch gekennzeichnet, dass** die zumindest eine faserverstärkte Einlage (18) in das zumindest teilweise geöffnete Formprägewerkzeug eingelegt wird und dass das Formprägewerkzeug nach dem Einlegen der zumindest einen faserverstärkten Einlage (18) geschlossen wird, um die Einlage vorzupositionieren oder zu verformen und dass anschließend das Formprägewerkzeug geöffnet wird.

3. Verfahren nach Anspruch 1, **dadurch gekennzeichnet, dass** die faserverstärkte Einlage in die Kavität des vordefiniert geschlossenen Formprägewerkzeugs eingebracht, insbesondere eingespritzt, wird und dass nach dem Einbringen das Formprägewerkzeug geöffnet wird.

4. Verfahren nach einem der Ansprüche 1 bis 3, **dadurch gekennzeichnet, dass** als Oberflächenmasse ein thermoplastischer Kunststoff verwendet wird.

5. Verfahren nach einem der Ansprüche 1 bis 4, **dadurch gekennzeichnet, dass** die Oberflächenmasse über einen Heißkanal (14) eingebracht wird.

6. Verfahren nach einem der vorhergehenden Ansprüche, **dadurch gekennzeichnet, dass** als Einlage glasmattenverstärkte Thermoplaste oder glasfaserverstärkte Thermoplaste verwendet werden.

7. Verfahren nach einem der vorhergehenden Ansprüche, **dadurch gekennzeichnet, dass** die faserverstärkte Einlage sowie die Oberflächenmasse stoffgleich oder stoffähnlich sind.

8. Vorrichtung zur Durchführung des Verfahrens nach einem der Ansprüche 1 bis 8 umfassend eine Schließeinheit mit einem zumindest zwei, relativ zueinander bewegliche Werkzeughälften (10, 12) aufweisenden Formprägewerkzeug, eine Einspritzeinrichtung zum Einbringen einer Oberflächenmasse in die von den zwei Werkzeughälften ausbildbare Formkavität sowie einer oder mehrerer Steuereinrichtungen zum kontrollierten Betätigen der Schließeinheit sowie zum gesteuerten oder geregelten Einspritzen der Oberflächenmasse, **dadurch gekennzeichnet, dass** die Steuereinrichtung oder die Steuereinrichtungen derart ausgebildet sind, um das Formprägewerkzeug nach einem vordefinierten Öffnungs- oder Schließvorgang bei gleichzeitigem oder intermittierendem Einspritzen der Oberflächenmasse zu schließen.

9. Vorrichtung nach Anspruch 8, **dadurch gekennzeichnet, dass** in einer Werkzeughälfte (12) ein Heißkanal (14) zum Zuführen der Oberflächenmasse ausgebildet ist.

10. Vorrichtung nach einem der Ansprüche 8 oder 9, **dadurch gekennzeichnet, dass** die Steuereinrichtung oder die Steuereinrichtungen derart ausgebildet sind, um das Formprägewerkzeug zunächst zum Vorpositionieren oder Verpressen einer faserverstärkten Einlage zu schließen und anschließend zur Ausbildung einer Formkavität mit vorgegebener Größe zu öffnen.

11. Vorrichtung nach einem der Ansprüche 8 bis 10, **dadurch gekennzeichnet, dass** neben der Einspritzeinrichtung zum Einbringen der Oberflächenmasse in die zumindest eine Formkavität eine weitere Einspritzeinrichtung vorgesehen ist, mit der die faserverstärkte Einlage in einem ersten Schritt in eine dazu ausgebildete Formkavität des Formprägewerkzeug einbringbar ist.

12. Vorrichtung nach Anspruch 11, **dadurch gekennzeichnet, dass** die weitere Einspritzeinrichtung eine Extrudereinrichtung sowie eine im Anschluss daran wirksame Einspritzvorrichtung umfasst.

13. Vorrichtung nach einem der Ansprüche 8 bis 11, **dadurch gekennzeichnet, dass** das Formprägewerkzeug zumindest drei Werkzeughälften zum Ausbilden zumindest zweier unterschiedlicher Formkavitäten umfasst, wobei die faserverstärkte Einlage in einer ersten Formkavität ausgebildet und die Oberflächenbeschichtung der faserverstärkten Einlage in einer zweiten Formkavität durchgeführt wird.
